(19) Europäisches Patentamt
European Patent Office
Office européen des brevets

(11) EP 0 707 030 A1

(12) EUROPEAN PATENT APPLICATION

(43) Date of publication:
17.04.1996 Bulletin 1996/16

(21) Application number: 95115995.3

(22) Date of filing: 11.10.1995

(51) Int. Cl.$^6$: C08J 3/20, C08J 3/12, B01J 2/16, B29B 9/16, C08K 5/00

(84) Designated Contracting States:
BE CH DE FR GB IT LI NL

(30) Priority: 13.10.1994 DE 4436552

(71) Applicant: DU PONT DE NEMOURS (DEUTSCHLAND) GMBH
D-63263 Neu-Isenburg (DE)

(72) Inventor: Michels, Klaus
D-59069 Hamm (DE)

(74) Representative: Weber, Thomas et al
von Kreisler, Selting, Werner,
Postfach 10 22 41
D-50462 Köln (DE)

# (54) Method and device for coating and/or mixing of polymeric materials

(57) The present invention relates to a method and device for the treatment of polymer materials wherein the granulated technical plastic materials are introduced through an inlet (22) into a container (10) wherein a fluidizing bed (16) is generated by air flowing in upward direction. By a spraying means (28), an additive is sprayed in finely distributed form into the fluidizing bed (16) in such a manner that the additive deposits on the granular polymeric particles. Within the fluidizing bed (16), the polymeric granules pass from the inlet (22) to an outlet (26) to be discharged therethrough. The method is carried out in continuous operation and is particularly suited for the coating of polymeric materials which are to be processed by injection moulding.

EP 0 707 030 A1

## Description

The present invention relates to a method for coating and/or mixing of granular technical polymeric materials with additives and a device for coating granular technical polymeric materials with additives.

The production of molded articles, particularly injection-molded articles from polymeric material, such as polyamides, is well known as is the use of lubricants to improve the feeding of polymeric material to an extruder, the rheology of the plastified polymer, and the release of the finished part from the mold. Beyond their immediate influence of the rheology, some substances used for lubrication present additional positive effects like smooth and glossy surfaces of the molded parts.

To obtain short and consistent polymer melt time - measured by the screw retraction time - it is necessary, especially when using small molding machines, to have the lubricant active before the polymer begins to melt. This means that the polymeric granules, which just begin to melt, will not fuse together while the screw is not rotating during the injection and hold cycle. Additionally, the molten lubricant will form a film on the inside of the molding machine barrel which results in improved feeding of the granules. Typically, such polymer/lubricant mixtures present an industrial hygiene issue as the lubricant typically is a micropowder mixed with polymer granules.

DE-A-42 29 088 discloses a method for the preparation of particulate polyamides with an aluminium distearate coating. The coating is achieved using the unique behavior of aluminum stearate to form films from powder under shear. The reaction is performed at room temperature in a 300 m long dense phase conveyor system. The disadvantage of this process is that it is limited to use of aluminum distearate only.

EP-A-0 280 221 discloses a method for the preparation of nylon (polyamide) granules with an outer shell consisting of a mixture of a) zinc stearate or aluminum stearate or a mixture of these, b) calcium stearate and c) stearyl stearate. The mixture is designed to have 1) a melt point below 100 °C and 2) a low viscosity to reduce the formation of lumps in the preparation process of the outer shell, typically in a batch operated tumbler mixer.

To avoid moisture related surface defects, molders normally dry polyamide granules prior to use. The drying is typically done at 80 to 90 °C. Granules coated with substances which have a low melt point are limited to a coating below 0.1% weight. Otherwise they will lump together in the dryer and additionally contaminate transfer pipe systems. The preferred coating of EP-A-0 280 221 uses 70% stearyl stearate having a melt point of some 60 °C. The preferred described mixture was found to have following melt behavior:

- melt peak 1 at 59 °C with a melt energy of 113 J/g
- melt peak 2 at 96 °C with a melt energy of 17 J/g

Further known is the use of nucleating agents. They aid in the improvement of the properties of molded articles by providing a very fine and regular structure resulting in largely stress free, dimensionally stable finished parts. Besides this advantage, nucleated polyamide yield shorter molding cycles resulting in higher molding machine productivity.

F.L. Binsbergen (Polymer, 11 (1970), 253) tested over 2000 nucleating agents in recrystallization of polyolefins in 1970. He grouped these nucleating agents by their physical and chemical natures. He had experimental evidence of nucleating agents as regards their physical state: to be crystalline, insoluble in the polymer melt, or soluble but crystallize from the polymer melt before the polymer starts to crystallize. The most efficient consist either of parallel layers of hydrocarbon with polar groups or of parallel rows of molecules. A key learning was that the nucleating activity largely depends on the quality of the dispersion of the nucleating agents in the polymer melt.

Melvin I. Kohan (Nylon Plastics, 11 (1973), 424) teaches that finely divided materials which are solid in the vicinity of the melting point of the nylon, do not agglomerate and provide polar surfaces capable of adsorbing amide groups, can serve as nucleating agents. These include 0.005 to 0.5% by weight sodium phenylphosphinate, sodium isobutylphosphinate, magnesium oxide, mercuric bromide, mercuric chloride, cadmium acetate, lead acetate and phenolphthalein as well as silver halides and very fine silicas and aluminas. Also cited as nucleating agents are 0.0001 to 0.1% by weight of graphite, molybdenum disulfide, lithium fluoride and talcum.

To achieve acceptable dispersion of nucleating micropowdered substances, it is known in the state of the art to melt-incorporate the nucleating agent into the polymer by a compounding process. This in principle requires that nylon in granulated form is subjected to a re-melting step with subsequent granulating and drying. In the compounding process the quality of the nylon suffers from thermal and oxidative degradation expressed by an increase in its yellowness index.

As to the method of coating additives onto the particulates of polymeric materials it is indicated that in the past additives were mixed in powdery form into the granular polymeric material. However, the relatively fine granulated powder tended to separate from the granular polymeric material. Further, it has been proposed to admix powdery additives into the flowable polymeric material. This addition in turn resulted in the deterioration of the properties of the polymers due to chemical reactions. The polymer which was produced did not have the desired properties anymore.

US-A-4 960 617 discloses a method for producing stabilized polyolefins or polyolefins containing additives wherein a mixture of additives and a molten polyolefin carrier is applied through a fluidizing technique onto the polymer particles which are to be stabilized. However, prior art fluidizing processes are always carried out in batch-type operation, with

air being blown into a container for maintaining the particles to be coated in a suspended state while the coating material is sprayed into the container and is deposited on the particles. After completion of a coating process, the container is discharged and subsequently a new batch is inserted into it. Methods of this type are not suited for large-scale applications.

The problems of the prior art are solved by providing lubrication/nucleation additives for the treatment, i.e. coating of and/or mixing with technical polymeric particulates, especially granular polyamides, which in combination with the polymers yield compositions fulfilling the following requirements:

- a well-adhering coating,
- a lubricant compound suited for drying the coated granules at 80 to 90 °C at weight levels well above 0.1%,
- a lubricant with good dispersing behavior for incorporation of micropowders for nucleation in the molding process, and
- a lubricant that enhances good feeding behavior, good internal lubrication and good hot metal surface wettability, good molded part ejectability, and no adverse effects like mold deposit formation and gassing.

It is a further object of the present invention to provide methods for the coating and/or mixing of technical polymeric materials with additives in general and especially with those additives mentioned below in a manner suitable for large-scale applications.

In detail the present invention relates to a method for the coating and/or mixing of granular technical polymeric materials with additives, characterized by conveying granules of a polymeric material in a controlled flow through a fluidized bed having an inlet to an outlet while spraying an additive onto the granules in the fluidized bed.

The specific additives for the lubrication of granular polymeric materials comprise

(a) 20 to 40 % by weight of aluminium stearate, typically containing free fatty acid in a total amount of 1.0 to 10.0% by weight, based on the amount of said aluminium stearate,
(b) 1 to 25% by weight of a zinc stearate,
(c) 35 to 79% by weight of at least one amide wax selected from N,N'-diamides of ethylenediamine and saturated $C_{16}$ to $C_{32}$ carboxylic acids whereby optionally up to 50% by weight based on the compound of (c) of said N,N'-diamides can be replaced by at least one compound selected from stearyl erucamide, erucyl erucamide, oleyl erucamide, stearyl stearamide, erucyl stearamide, stearyl stearate and $C_{27}$ to $C_{45}$ ketones, and
(d) a metal hydroxide in an amount sufficient to convert at least 20% of the free acid contained in the aluminum stearate into the corresponding metal salt.

The amounts indicated for (a), (b) and (c) are based on the total amount of (a)+(b)+(c).

Preferably the additive comprises

- 20 to 35% by weight of the aluminum stearate, and
- 3 to 20% by weight of the zinc stearate, and
- 45 to 77% by weight of the amide wax.

The aluminium stearates which can be used are selected from aluminium distearate, aluminium tristearate and mixtures thereof. These compounds typically contain 1.0 to 10.0% by weight, based on the amount of aluminium stearate, of the free fatty acid. Usually this is predominantly stearic acid and minor amounts of palmitic acid depending on the process of preparation of the aluminum stearate.

The N,N'-diamides are preferably selected from bis-stearyl-ethylene-diamine, bis-oleyl-ethylenediamine, bis-montanyl-ethylenediamine, or mixtures thereof.

The N,N'-diamides are good flow improvers and mold release agents while having an excellent thermal stability. The preferred N,N'-diamide is N,N'-bis-stearyl-ethylene diamine. It has a melting point of about 140 °C; its use in the additive mixture of the present invention therefore substantially helps to provide a lubricant compound with a sufficiently high melting point to avoid lumping in drying of polyamide with coatings higher than 0.1%. Another advantage in using an amide wax is its good wetting performance for micropowders like the preferred nucleants of the present invention.

Preferably up to 50% by weight of the N,N'-diamides are replaced by at least one of the compounds mentioned above. Most preferred is a mixture of bis-stearyl-ethylenediamine and stearyl erucamide in a weight ratio of up to 1:1, preferably 3:2.

Preferred $C_{27}$ to $C_{45}$ ketones are selected from the group of long-chain fatty ketones preferably symmetrical ketones such as bis-stearyl ketone (bis-heptadecylketone) or technical mixtures of said fatty ketones.

The metal hydroxide is selected from the type $MOH$, $M(OH)_2$, $M(OH)_3$ wherein M represents a metal cation. The metal hydroxide is preferably selected from $LiOH$, $NaOH$, $KOH$, $Mg(OH)_2$, $Ca(OH)_2$, $Ba(OH)_2$, $Zn(OH)_2$, $Al(OH)_3$ and mixtures thereof.

The amount of metal hydroxide to be employed to convert at least 20% of the free fatty acid present in the aluminum stearate can easily be calculated after the amount of the free acid in the aluminum stearate has been determined. The determination of the amount of free acid can be determined by conventional methods known to the skilled person. Preferably, the free acid is converted into its metal salt by 100%, i.e. a stoichiometric amount of metal hydroxide is used.

Zinc hydroxide [$Zn(OH)_2$)] is preferred in combination with zinc stearate. Preferably, it is added to the composition in admixture with the zinc stearate.

The additive may further comprise up to 60 weight parts based on 100 weight parts of (a), (b), (c) and (d) of a micropowdered nucleant selected from sodium phenyl phosphinate, sodium isobutyl phosphinate, magnesium oxide, mercuric bromide, mercuric chloride, cadmium acetate, lead acetate, phenolphthalein, silver halides, silica, alumina, graphite, molybdenum disulfide, lithium fluoride, talcum, and mixtures thereof. Preferably the nucleating agent is contained in the additive in an amount of up to 40 weight parts more preferably up to 20 weight parts. Talcum (magnesium silicate) is preferred as nucleating agent.

By the term "micropowdered" is meant that at least 99% by weight of the particles of the nucleating agent have a particle size of less than 20 µm, preferably less than 10 µm.

It has surprisingly been found that polymeric granules coated with the additive of the present invention yield molded parts with equal or better properties compared to those prepared according to conventional methods of the state of the art. Coating is achieved by contacting the particulate polymers with a fine spray of the molten lubrication additive with or without nucleating agent.

The additive of the present invention effects the shortening of the molding cycle in the manufacture of articles using polymer particulates which have been coated with the lubrication/nucleation compound. The additive of the present invention is a liquid at temperatures above 140 °C.

The term "technical polymeric materials" means re-meltable thermoplastic materials such as those mentioned below. Such polymeric materials are produced in strands having a diameter of 2.5 to 3 mm and which subsequently are granulated. In this manner, there is produced a granular material having a particle weight of the granules ranging from 2 to 50 mg, preferably from 5 to 30 mg and most preferably from 12 to 25 mg.

The preferred polymers which can be coated with the additive of the present invention are thermoplastic polymers (engineering resins) such as polyamides, polyaramides, polyesters, polyetheresters, polyacetals and polycarbonates. The polyamide (PA) resins used in the present invention can be aliphatic, semi-aromatic or aromatic and are well known in the art. It is a high molecular weight substance wherein hydrocarbon groups or hydrocarbon groups broken by oxygen or sulfur are joined by amide bonds. This includes those that are generally called nylon and have a molecular weight of at least 5,000.

This polyamide resin can be one produced by condensing a linear diamine represented by the formula $H_2N\text{-}(CH_2)_x\text{-}NH_2$ (wherein x is an integer of from 4 to 14) and a linear dicarboxylic acid represented by the formula $HO_2C(CH_2)_y\text{-}CO_2H$ (wherein y is an integer of from 2 to 12). These polyamides can also be produced from amide-forming derivatives of said amine and acid, e.g., esters, acid chlorides, and amine salts. Examples of a dicarboxylic acid used in the production of this polyamide include malonic acid, succinic acid, glutaric acid, adipic acid, pimelic acid, suberic acid, sebacic acid, and dodecane dioate. Examples of diamines include hexamethylenediamine and octamethylenediamine.

Another type of polyamide resin is produced by condensation of ω-aminocarboxylic acid represented by the formula $H_2N\text{-}(CH_2)_x\text{-}CO_2H$ (wherein x is an integer of from 3 to 12) or an intramolecular amide thereof.

The polyamides may also include polyamides wherein part of the diamine component is bis(3-aminopropyl)ether, bis(aminomethyl)cyclohexane, m-phenylenediamine, m-xylylenediamine, or 4,4'-diaminodiphenyl ether and part of the dicarboxylic acid component is isophthalic acid, terephthalic acid, etc.

Examples of the polyamides include polyhexamethylene adipamide (nylon 6.6), polyhexamethylene azealamide (nylon 6.9), polyhexamethylene sebacamide (nylon 6.10), polyhexamethylene dodecanoamide (nylon 6.12), polycaprolactam (nylon 6), polylauryl lactam, poly-11-amino-undecanoamide, and polybis-(p-aminocyclohexyl)methanedodecanoamide. Further examples are nylon 11, nylon 12, nylon 4.6, nylon 12.12, nylon 6.6/6 copolymers. The aforementioned polyamides also include copolymers and multicomponent polymers obtained by combining a number of the aforementioned monomers.

Semi-aromatic nylons are made from aromatic dicarboxylic acids such as terephthalic acid (T) and isophthalic acid (I) with an aliphatic diamine such as described above, including methyl pentamethylene diamine (D). Illustrative semi-aromatic nylons include PA6.T, PA6.I, PA6/6.T, PA6/6.I, PA6.6/6.T, PA6.6/6.I, PA6.T.6, PA6.T.I, PA6.T.12, PA6.T/D.T, PA6.T/6.I/D.T, PA6.T/6.6/D.T, and physical blends thereof or with other polymers.

Aromatic polyamides (polyaramides) are such polymers that are partially, preponderantly or exclusively composed of aromatic rings, which are connected through carbamide bridges or optionally, in addition also through other bridging structures. The structure of such aromatic polyamides can be elucidated by the following general formula of repeating units:

$$(\text{-CO-NH-}A_1\text{-NH-CO-}A_2\text{-CO-})_n$$

wherein $A_1$ and $A_2$ are the same or different and signify aromatic and/or polyaromatic and/or heteroaromatic rings, that can also be substituted. Typically $A_1$ and $A_2$ may independently from each other be selected from 1,4-phenylene, 1,3-phenylene, 1,2-phenylene, 4,4'-bi-phenylene, 2,6-naphthylene, 1,5-naphthylene, 1,4-naphthylene, phenoxyphenyl-4,4'-diylene, phenoxyphenyl-3,4'-diylene, 2,5-pyridylene and 2,6-quinolylene which may or may not be substituted by one or more substituents which may comprise halogen, $C_1$-$C_4$-alkyl, phenyl, carboalkoxyl, $C_1$-$C_4$-alkoxyl, acyloxy, nitro, dialkylamino, thioalkyl, carboxyl and sulfonyl. The -CONH-group may also be replaced by a carbonyl-hydrazide (-CONHNH-) group, azo- or azoxy-group.

Other useful polyamides are disclosed in US-A-4 670 343 wherein the aromatic polyamide is a copolyamide in which preferably at least 80% by mole of the total of the moieties $A_1$ and $A_2$ are 1,4-phenylene and phenoxyphenyl-3,4'-diyl which may or may not be substituted and the content of phenoxyphenyl-3,4'-diyl is 10% to 40% by mole.

Further suitable polyamides are those structures in which at least one of the phenyl radicals bears one or more of the above-mentioned substituents. Additional aromatic compounds contain, to some extent at least, repeating units that are derived from 3- or 4-amino-benzoic acid, respectively.

Additional suitable aromatic polyamides are of the following structure

$$(\text{-NH-Ar}_1\text{-X-Ar}_2\text{-NH-CO-Ar}_1\text{-X-Ar}_2\text{-CO-})_n,$$

in which

X represents O, S, $SO_2$, NR, $N_2$, $CR_2$, CO,

R represents H, $C_1$-$C_4$-alkyl and

$Ar_1$ and $Ar_2$ which may be same or different are selected from 1,2-phenylene, 1,3-phenylene and 1,4-phenylene and in which at least one hydrogen atom may be substituted with halogen and/or $C_1$-$C_4$-alkyl.

The polyester as used herein include polymers having an inherent viscosity of 0.3 or greater and which are, in general, linear saturated condensation products of glycols and dicarboxylic acids, or reactive derivatives thereof. Preferably, they will comprise condensation products of aromatic dicarboxylic acids having 8 to 14 carbon atoms and at least one glycol selected from the group consisting of neopentyl glycol, cyclohexane dimethanol and aliphatic glycols of the formula $HO(CH_2)_nOH$ where n is an integer of 2 to 10. Up to 50 mole percent of the aromatic dicarboxylic acids can be replaced by at least one different aromatic dicarboxylic acid having from 8 to 14 carbon atoms, and/or up to 20 mole percent can be replaced by an aliphatic dicarboxylic acid having from 2 to 12 carbon atoms.

Preferred polyesters include polyethylene terephthalate, poly(1,4-butylene)terephthalate, and 1,4-cyclohexylene dimethylene terephthalate/isophthalate copolymer and other linear homopolymer ester derived from aromatic dicarboxylic acids including isophthalic, bibenzoic, naphthalene-dicarboxylic including the 1,5-, 2,6-, and 2,7-naphthalene-dicarboxylic acids, 4,4'-diphenylenedicarboxylic acids, bis(p-carboxyphenyl)methane, ethylene-bis-p-benzoic acid, 1,4-tetramethylene bis(p-oxybenzoic) acid, ethylene bis(p-oxybenzoic) acid, 1,3-trimethylene bis(p-oxybenzoic) acid, and 1,4-tetramethylene bis(p-oxybenzoic) acid, and glycols selected from the group consisting of 2,2-dimethyl-1,3-propane diol, neopentyl glycol, cyclohexane dimethanol and aliphatic glycols of the general formula $HO(CH_2)_nOH$ where n is an integer from 2 to 10, e.g., ethylene glycol, 1,3-trimethylene glycol, 1,4-tetramethylene glycol, 1,6-hexamethylene glycol, 1,8-octamethylene glycol, 1,10-decamethylene glycol, 1,3-propylene glycol and 1,4-butylene glycol. Up to 20 mole percent, as indicated above, of one or more aliphatic acids, including adipic, sebacic, azelaic, dodecanedioic acid, 1,4-cyclohexanedicarboxylic acid can be present.

The most common polyester compositions are based on polyethylene terephthalate homopolymers, polybutylene terephthalate homopolymers, polyethylene terephthalate/polybutylene terephthalate copolymers, polyethylene terephthalate/polybutylene terephthalate mixtures and mixtures thereof, although other polyesters can be used as well, alone, in combination with each other, or in combination with those polyesters listed above. Such other polyesters include copolyetheresters such as described in U.S.-A-3 651 014, 3 763 109 and 3 766 146.

The inherent viscosity of the polyesters is measured at a concentration of 0.32 grams/100 ml in trifluoroacetic acid (25)/methylene chloride (75) at $25 \pm 0.10$ °C and computed as indicated in US-A-4 753 980.

The preferred polyetheresters are segmented thermoplastic copolyester elastomers consisting essentially of a multiplicity of recurring intralinear long chain and short chain ester units connected head-to-tail through ester linkages, said long chain ester units being represented by the following structure:

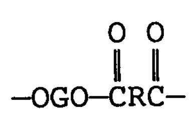

(a)

and said short chain ester units being represented by the following structure:

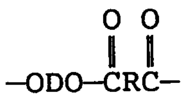

(b)

wherein:

G is a divalent radical remaining after removal of terminal hydroxyl groups from poly(alkylene oxide) glycols having a carbon-to-oxygen ratio of about 2.0-4.3 and a molecular weight of about 600-6000;

R is a divalent radical remaining after removal of carboxyl groups from a dicarboxylic acid having a molecular weight less than about 300; and

D is a divalent radical remaining after removal of hydroxyl groups from a low molecular weight diol having a molecular weight less than about 250.

Especially preferred are polyetheresters wherein short chain ester units constitute about 25-65% by weight of the copolyester, at least about 75% of the R groups are 1,3-phenylene radicals, at least about 75% of the D groups are 1,4-butylene radicals, and the sum of the percentages of the R groups which are not 1,3-phenylene radicals and of the D groups which are not 1,4-butylene radicals cannot exceed about 25%; said copolyester being further characterized by a melt index at 120 °C by ASTM-D1238 of about 2-25 grams/10 minutes.

The polyetherester polymer is prepared by melt condensation of isophthalic acid or its ester-forming equivalents (optionally containing up to 25 mole% of at least one other dicarboxylic acid especially terephthalic acid or its ester-forming equivalents), 1,4-butanediol or its ester forming equivalents (optionally containing up to 25 mole% of at least one other low molecular weight diol) and a poly(alkylene oxide) glycol having a number average molecular weight of 600-6000 and a carbon-to-oxygen ratio of about 2.0-4.3.

Representative poly(alkylene oxide) glycols which provide the diradical -G- include poly(ethylene oxide)glycol, poly(propylene oxide)glycol, poly(tetramethylene oxide)glycol, ethylene oxide-capped poly(propylene oxide)glycol and random copolyether glycols of ethylene oxide with propylene oxide and tetrahydrofuran with ethylene oxide or 3-methyltetrahydrofuran. Poly(ethylene oxide)glycol and poly(tetramethylene oxide)glycol are preferred.

Included among the low molecular weight diols (other than 1,4-butanediol) which may be used to provide -D- diradicals are acyclic, alicyclic and aromatic dihydroxy compounds. Preferred are diols with 2-15 carbon atoms such as ethylene, propylene, isobutylene, pentamethylene, 2,2-dimethyltrimethylene, hexamethylene and decamethylene glycols. 1,4-butenediol, dihydroxy cyclohexane and cyclohexane dimethanol. Especially preferred are aliphatic diols containing 2-8 carbon atoms. Equivalent ester-forming derivatives of diols are also useful (e.g. ethylene oxide or ethylene carbonate can be used in place of ethylene glycol). The term "low molecular weight diols" as used above should be construed to include such equivalent ester-forming derivatives; provided, however, that the molecular weight requirement pertains to the diol only and not to its derivatives.

Dicarboxylic acids (other than isophthalic acid) which may be used to provide -R- diradicals are aliphatic, cycloaliphatic or aromatic dicarboxylic acids of a low molecular weight, i.e., having a molecular weight of less than about 300. The term "dicarboxylic acids" as used above, includes acid equivalents of dicarboxylic acids having two functional carboxyl groups which perform substantially like dicarboxylic acids in reaction with glycols and diols in forming copolyester polymers. These equivalents include esters and ester-forming derivatives, such as acid halides and anhydrides. The molecular weight requirement pertains to the acid and not to its equivalent ester or ester-forming derivative. Thus, an ester of a dicarboxylic acid having a molecular weight greater than 300 or an acid equivalent of a dicarboxylic acid having a molecular weight greater than 300 is included provided the acid has a molecular weight below about 300. The dicarboxylic acids can contain any substituent groups which do not substantially interfere with the copolyester polymer formation and use of the polymer in the elastomer compositions of this invention.

Aliphatic dicarboxylic acids, as the term is used above refers to carboxylic acids having two carboxyl groups each attached to a saturated carbon atom. If the carbon atom to which the carboxyl group is attached is saturated and is in a ring, the acid is cycloaliphatic. Aliphatic or cycloaliphatic acids having conjugated unsaturation often cannot be used because of homopolymerization. However, some unsaturated acids, such as maleic acid can be used.

Aromatic dicarboxylic acids, as the term is used above are dicarboxylic acids having two carboxyl groups attached to a carbon atom in an isolated or fused benzene ring. It is not necessary that both functional carboxyl groups be attached to the same aromatic ring and where more than one ring is present, they can be joined by aliphatic or aromatic divalent radicals such as -O- or -$SO_2$-.

Representative aliphatic and cycloaliphatic acids which can be used for the polyetheresters of this invention are sebacic acid, 1,3-cyclohexane dicarboxylic acid, 1,4-cyclohexane dicarboxylic acid, adipic acid, glutaric acid, succinic acid, carbonic acid, oxalic acid, azelaic acid, diethylmalonic acid, allyl-malonic acid, 4- cyclohexane-1,2-dicarboxylic

acid, 2-ethyl suberic acid, 2,2,3,3-tetramethylsuccinic acid, cyclopentanedicarboxylic acid, decahydro-1,5-naphthylene dicarboxylic acid, 4,4'-bicylcohexyl dicarboxylic acid, decahydro-2,6-naphthylene dicarboxylic acid, 4,4'-methylene-bis(cyclohexyl) carboxylic acid, 3,4-furan dicarboxylic acid, and 1,1-cyclobutane dicarboxylic acid. Preferred aliphatic acids are cyclohexane-dicarboxylic acids and adipic acid.

Representative aromatic dicarboxylic acids which can be used in the polyetheresters of this invention include phthalic and terephthalic acid, bibenzoic acid, substituted dicarboxy compounds with two benzene nuclei such as bis(p-carboxyphenyl)methane, p-oxy(p-carboxyphenyl) benzoic acid, ethylene bis(p-oxybenzoic acid) 1,5-naphthalene dicarboxylic acid, 2,6-naphthalene dicarboxylic acid, 2,7-naphthalene dicarboxylic acid, phenanthralene dicarboxylic acid, anthracene dicarboxylic acid, 4,4'-sulfonyl dibenzoic acid and $C_1$-$C_{12}$ alkyl and ring substitution derivatives thereof such as halo, alkoxy, and aryl derivatives. Hydroxyl acids such as p-(β-hydroxy-ethoxy)benzoic acid can also be used providing an aromatic dicarboxylic acid is also present.

Aromatic dicarboxylic acids are a preferred class for preparing the copolyester polymers useful for compositions of this invention. Among the aromatic acids, those with 8-16 carbon atoms are preferred, particularly the phenylene dicarboxylic acids, i.e. phthalic and terephthalic acids.

Isophthalic acid (and a second dicarboxylic acid if present) is preferably introduced into the polymer in the form of a di-lower alkyl ester of which dimethyl isophthalate is especially preferred. 1,4-Butanediol (and a second low molecular weight diol if present) is preferably used as such, but derivatives such as the diacetate can be used for their manufacture described in US-A-5 049 648.

Polycarbonates that are useful herein are well known in the art and can be most basically defined as possessing the repetitive carbonate group

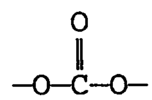

and in addition will always have the

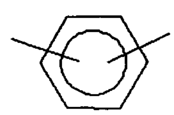

phenylene moiety attached to the carbonate group (cf. US-A-3 070 563).

Preferably, the polycarbonate can be characterized as possessing recurring structural units of the formula

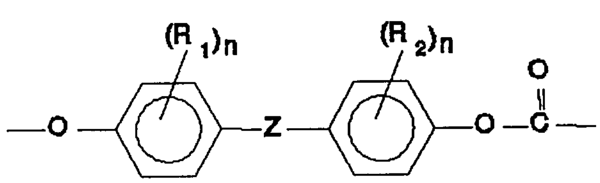

wherein Z is a single bond, an alkylene or alkylidene moiety with 1-7 carbon atoms, a cycloalkylene or cycloalkylidene moiety with 5-12 carbon atoms, -O-, -S-, -CO-, -SO- or -$SO_2$-, preferably methylene or isopropylidene; $R_1$ and $R_2$ are a hydrogen, a halogen, or an alkylene or alkylidene moiety having 1-7 carbon atoms, and n equals 0 to 4.

Amorphous thermoplastic polycarbonates are commercially available or can be readily prepared by techniques well known to those skilled in the art. The most preferred aromatic polycarbonate on the basis of commercial availability and available technical information is the polycarbonate of bis(4-hydroxyphenyl)-2,2-propane, known as bisphenol-A polycarbonate. Amorphous thermoplastic polycarbonate is further described on pages 149-150 of Engineering Plastics, volume 2, published by ASM international, Metals Park, Ohio (1988).

The polyacetals (polyoxymethylenes) include homopolymers of formaldehyde, copolymers of formaldehyde, cyclic oligomers of both, or mixtures thereof. Polyoxymethylene homopolymers and copolymers are available commercially.

Copolymers contain one or more comonomers generally used in preparing polyoxymethylene compositions. Comonomers more commonly used include alkylene oxides of 2-12 carbon atoms. If copolymer is selected, the quantity of comonomer will be not more than 20 weight percent, preferably not more than 15 weight percent, and most preferably 2 weight percent. The most preferred comonomer is ethylene oxide. For further details it is referred to EP-A-0 117 664.

Depending on the polymer to be coated and the properties to be achieved, the nature and amount of the lubrication and/or nucleation additives may require adjustment on a case-by-case basis

All of the polymers mentioned above can already contain, prior to the melt spray coating, typical additives known in the art such as reinforcing fillers, impact modifiers, flame retardants, colorants, UV stabilizers, antioxidants, thermal stabilizers to improve the thermal and mechanical properties and obtain reinforcement. Examples of fillers include mineral fibers, synthetic fibers such as aramides and glass fibers, especially crushed (milled) glass fibers with an aspect ratio of more than 30, glass flaked carbon fibers, wollastonite, talc, kaolin, calcium carbonate, diatomaceous earth, mica, and potassium titanate whiskers. One type or a combination of types of these fillers may be used. These fillers are added in an amount of from 10 to 40% by weight of the polyamide resin composition.

The shape of the granules is of minor importance; the preferred size is determined by the weight of the particulates.

The use of aluminum-stearate, preferably aluminum-distearate is based on its good lubricant effects in, e.g. polyamide, especially, however, on its property to provide a good impact resistance of the coating. Trying to melt-mix it with bis-stearyl-ethylene-diamine, however, proved to be extremely difficult because of the big difference in viscosity and bad solubility. A surprising discovery, however, was made when aluminum distearate was mixed with zinc stearate which contained a zinc hydroxide. Such mixture did easily melt mix with the amide wax without any mechanical work.

The additive of the present invention is preferably prepared such that the remainder of free fatty acid of the mixture is very small. This is favorable in respect of eliminating mold deposits.

The additive mixture can easily be prepared by mixing the respective ingredients by common methods.

The total coating level on the polymeric particulates is 0.03 to 2.0% by weight, preferably 0.05 to 1.0% by weight and most preferably 0.05 to 0.5% by weight based on the weight of coated particles.

The invention is further directed to methods and devices for the treatment, i.e. the coating and/or mixing of granular technical polymeric materials with additives and especially those mentioned above.

In detail, the present invention pertains to the use of the additive as mentioned above for the treatment of granular polymeric materials.

For moulding objects of thermoplastic polymers, injection-moulding machines are supplied with technical polymeric materials in granular form. The polymeric material requires various additives for safeguarding correct and trouble-free operation of the injection-moulding machine. Such additives are, for instance

a) outer lubricants for allowing undisturbed inflow of the polymeric material into the injection-moulding machine,

b) inner lubricants for allowing undisturbed flow of the polymeric material within the injection-moulding machine,

c) separating agents to be used as mould release agents for separating the completed polymeric product from the injection mould and

d) additives which fulfil all requirements a), b) and c), i.e. such as those according to the present invention.

Applying such additives to polymeric materials is accomplished by a continuous, fluidized bed coating process which uses controlled flow of polymeric particles through the fluidized bed while an additive is introduced by spraying.

In the process of the invention agitation of the polymeric granules is achieved in the fluidized bed. Through a horizontal screen in the bottom the bed, gas, e.g. air, flows upwards and thus permanently keeps the granules fluidized. The granules move from the inlet of the fluidized bed to the outlet and pass at least one sprayable additive system which provides for spraying of, e.g. molten lubricant, onto the fluidized granules. Small droplets of the molten lubricant hit the granules (pellets) and form a homogenous coating. Before the granules have moved to the outlet, the sprayed on coating is fully crystallized and forms a firmly adhering coating.

The residence time of the pellets in the fluidized bed depends on the feed rate and the bed height which can be controlled by adjusting the vertical position of the outlet. The residence time is adjusted by the feed rate such that a very thin and homogeneous coating of all pellets is achieved. The coating is typically 0.05 to 0.5% weight, but can be up to 2% weight of the finished product.

The process is also suited for mixing of polymeric pellets with pelletized additives. The fluidized bed provides for an intensive and homogeneous mixing, thus it can be used for a combination process of mixing and coating of additives.

The device for the coating and/or the mixing of the pellets is designed in a way that the pellets to be treated will travel in the fluidized mode along a treatment zone where they receive the spray coating. Preferably the device for the fluidized bed is a round vessel with the fluidized bed established around a middle cone. This allows the building of a cheap and small unit.

Hereinafter, the embodiments of the invention will be described in greater detail with reference to the drawings.

Figure 1 shows a schematic perspective view of an apparatus for coating and/or mixing of thermoplastic polymers with additives.

Figure 2 shows a horizontal view of the apparatus according to figure 1.

Figure 3 shows an apparatus with a longitudinal fluidized bed.

The apparatus of figure 1 includes of a round vessel 10 which has a cylindrical top part 10a, and a cylindrical bottom part 10c of a lesser diameter. At the top of the vessel 10 is an opening which is closed with a cover 11. At the bottom is a flange 12 suited to bolt the apparatus to the floor.

Top section 10a is joined to bottom section 10c by conical middle section 10b. At the lower part of the middle section 10b, a screen bottom 13 is installed, with a mesh size preventing the granules from falling through.

The screen bottom 13 is ring shaped with hole 13a in the middle. The opening in the middle 13a is covered with a conical center part 14 having an opening 26 on one side.

Connected to the bottom part 10c is an air inlet 15 which allows air to be blown into the interior of bottom part 10c. The air moves upwardly through the screen bottom 13 and establishes inside the vessel 10 the fluidized bed 16. Subsequently, the air moves to the outlet 17 installed on the top part 10a of vessel 10 and is ducted to a heater 18 and a blower 19 which is connected to the inlet 15. This set-up provides for the circulation of warm air through the apparatus. The duct from top part 10a has an opening 20 to provide atmospheric pressure in the top part of the apparatus, avoiding any feeding disturbances from unbalanced gas flow through polymeric granule feeder 23. The air pressure of the blower 19 ahead of the screen bottom is usually mentioned at about 784.5 Pa (about 80 mm water column); however, the only requirement of the air pressure is that it is adequate to move the polymeric granules towards the weir.

At the lower part of the top section 10a an inlet 22 is installed through which the polymeric granules are metered to the fluidized bed via a continuous dosing device 23. In the case of mixing polymeric granules with other additives, several dosing devices and inlet are provided.

Next to the inlet 22 a radial separation 25 is installed so as to provide a barrier between the wall of vessel 10 and the conical center part 14 thus interrupting the fluidized ring-type bed. On the other side of the separation 25, outlet 26 is arranged in the center part 14. Through the outlet 26 the treated pellets move from the vessel 10 into a collection hopper (not shown).

The travel path around the center part 14 from the inlet 22 to the outlet 26 is the processing zone. Material entering the reactor via the inlet 22 will be fluidized by the air flowing through the screen bottom 13. New material being fed will push the pellets in the bed under heavy mixing until it exits through the outlet 26.

Within the processing zone, a spray device 28 is installed inside the vessel 10. This device sprays through one or more spray nozzles a molten additive onto the fluidized bed 16. The spray device is connected to a feeding system 30 which delivers the additive at s pre-selected constant rate to the pellet flow. The temperature of the molten additive is typically about 30 °C above its melting point to optimize the spray conditions.

The spray device 28 is designed to deliver fine spray droplets of the molten additive which deposit on the pellet surface. Due to the incessant positional change of the pellets within the processing zone and the favorable backward mixing in the continuous fluidized ring type bed, a homogeneous coating of the pellets is achieved. The temperature of the gas used for fluidizing the bed is below the freezing point of the additive used. Therefore, the droplets deposited on the pellet surface will form a solid coating before the pellets exit the vessel through outlet 26.

Figure 3 shows a fluidization device consisting of a longitudinal vessel in which the screen bottom 13 is straight between the pellet inlet 22 and the pellet outlet 26. The air flows from the intake 15 to the outlet 17. In front of the pellet outlet 26 is a horizontal weir 33. The coated pellets exit via a chute 34 in the vessel 10. The additive is sprayed onto the fluidized bed 16 via a spray applicator 28.

The air used for the fluidized bed is supplied from below and should be dried for treatment of certain pellets like polyamides and preheated to 40 to 60 °C to improve film forming of the coating. Preferably the temperature is kept at around above 50 °C. The velocity at the screen bottom (13) is preferably about 2 m/sec providing a fluidized bed height of about 250 mm. The feeding rate of the pellets is selected to provide a residence time in the reactor of about 1 to 5 minutes.

The reactor is especially suited for continuous operation as it keep itself free of additive deposits.

The preferred coating according to the invention is composed from several components in such a way that the compound in addition to the desired lubricant properties is providing a viscosity competitive with the spray coating need and adheres well to the pellet surface. Preferred additives which can be used in the method and device of the present invention are the additives of the present invention mentioned above. Furthermore, any sprayable additive can be used such as waxes selected from amide waxes, montan waxes, polyethylene waxes and the like.

The present invention further relates to the granulated polymeric materials which have been treated with additives and especially with the additives according to the present invention as mentioned above, which granulated polymeric material is obtainable by the process according to the present invention mentioned above. Said granulated polymeric material is completely coated with the additive on its surface. The additive is well adhering.

The present invention is further illustrated by the following examples. The present invention is not limited to the examples.

Examples:

Example 1

Granules of nylon 6.6 polymer having a viscosity number (VN) of 135 (measured per DIN 53 727 in formic acid) and a moisture of 0.12% measured per Karl Fischer method were coated with a lubricant compound containing:

(a) 70 weight parts aluminum distearate (3.5% by weight of free fatty acid content)
(b) 9.15 weight parts zinc stearate
(c) 120 weight parts bis-stearyl ethylene diamine 50 weight parts stearyl erucamide
(d) 0.85 weight parts $Zn(OH)_2$, finely divided.

The test items were prepared in a continuous process in a device as described herein with a residence time of 6 minutes at a throughput rate of 200 kg/h. The lubricant composition was heated in a electrically heated tank to 180 +/- 5 °C. The molten lubricant was sprayed onto the bed of fluidized granules via a heated injection pump. The fluidizing air was kept at a temperature of 60 +/- 5 °C. The coating was applied onto the granules at levels between 0.1% and 0.6%.

The granules were fed to an injection molding machine for ejection force evaluation. The study was performed on a cup type mold with a straight cylindrical inside and a perforated bottom to avoid false readings through a vacuum effect during ejection.

The ejection rod system was equipped with a pietzo quartz transmitter for ejection force readings. The ejection force expressed in $kp/cm^2$ active surface is shown in following table. The table contains one candidate with a coating containing 0.25% of the above lubricant and 0.1% talcum (particle size: 99% < 10 µm). As a standard product fast moulding PA 6.6 of identical viscosity and moisture containing a 0.25% melt incorporated stearic acid amide and 0.1% surface coated aluminum stearate was compared.

The example demonstrates that

(1) the ejection force is an exponential equation $EF = 0.26 \times WT\%^{-0.36}$ [$kp/cm^2$]
(2) the nucleated composition reduces the ejection force by 17% below the non-nucleated one, and
(3) the present standard product requires 25% more ejection force as the non-nucleated test composition.

Table 1

| | Ejection Force ($kp/cm^2$) | | |
|---|---|---|---|
| Lubricant (wt%) | Test Composition | | Standard Product |
| | Non-nucleated | Nucleated | |
| 0 | 3,14 | - | - |
| 0,1 | 0,59 | - | - |
| 0,25 | 0,41 | 0,34 | - |
| 0,35 | - | - | 0,46 |
| 0,4 | 0,37 | - | - |
| 0,6 | 0,33 | - | - |

Example 2

Granules of nylon 6.6 were prepared with the same method and from the same base material as described in example 1 with a lubricant compound containing
60 weight parts aluminum distearate (3.5% by weight of free fatty acid content)
59.91 weight parts zinc stearate

165 weight parts bis-stearyl ethylene diamine
15 weight parts stearyl stearate
0.09 weight parts of $Zn(OH)_2$, finely divided.

The lubricant was modified with talcum (see Example 1) at two different levels.

From the coated resin granules test bars were molded and analyzed for physical properties. Additionally the molded parts were analyzed for nucleation. The nucleation analysis included the measurement of crystal size and isothermal crystallization rate (ICR). The ICR was determined on a Perkin-Elmer 7 Series Thermal Analysis System.

The test specimen were recrystallized from polymer melt state (290 °C) by cooling down rapidly at a rate of 200 °C/min to 235 °C, 240 °C or 245 °C and by holding long enough until the polymer was fully crystallized. The crystallization half times are shown in Table 2. The half time is the time needed for the recrystallization process to reach its half point which is conveniently marked at the peak position. The table also shows the average spherulite size. The samples were cross sectioned on a REICHERT-JUNG ULTRACUT microtome, mounted between glass slides and coverslips using

canada balsam and photographed using cross polarized light on a LEITZ optical microscope.

Table 2

Crystallization Half Times (min) and Spherulite Size

| Sample | % weight | | Isothermal hold temp. (°C) | | | Spherulite Size (µm) |
|---|---|---|---|---|---|---|
| | Lubricant | Talcum | 235 | 240 | 245 | |
| A (Control) | 0 | 0 | 0,61 | 1,26 | 4,04 | 7 |
| B | 0,3 | 0 | 0,64 | 1,39 | 4,80 | 12 |
| C | 0,3 | 0,01 | 0,44 | 0,90 | 2,61 | 3 |
| D | 0,3 | 0,10 | 0,41 | 0,72 | 2,04 | 1 |

Table 3 shows the mechanical properties of sample A through D for dry-as-molded (DAM) test specimen

Table 3

| Sample | Tensile Strength at yield (MPa) | Tensile Strength at break (MPa) | Tensile Strain at break (%) | Charpy Impact notched (kJ/m) | Mold Shrinkage (%) |
|---|---|---|---|---|---|
| A (Control) | 83,5 | 51,0 | 36 | 4,9 | 1,34 |
| B | 85,3 | 54,3 | 39 | 6,2 | 1,43 |
| C | 87,9 | 58,1 | 30 | 5,9 | 1,28 |
| D | 92,2 | 75,4 | 25 | 5,1 | 0,94 |

Tables 2 and 3 illustrate how homogeneously the nucleating agent - incorporated in the surface coated lubricant - is dispersed in the molded part.

An additive composition for the lubrication of granular polymeric materials comprising

(a) 20 to 40% by weight of aluminum stearate, typically containing free fatty acid in a total amount of 1.0 to 10.0% by weight, based on the amount of said aluminum stearate,
(b) 1 to 25% by weight of zinc stearate,
(c) 35 to 79% by weight of at least one amide wax selected from N,N'-diamides of ethylene diamine and saturated $C_{16}$ to $C_{32}$ carboxylic acids whereby optionally up to 50% by weight based on the amount of (c) of said N,N'-diamides can be replaced by at least one compound selected from stearyl erucamide, erucyl erucamide, oleyl erucamide, stearyl stearamide, erucyl stearamide, stearyl stearate and $C_{27}$ to $C_{45}$ ketones, and
(d) a metal hydroxide in an amount sufficient to convert at least 20% of the free acid contained in the aluminum stearate into the corresponding metal salt.

The additive as described above comprising

- 20 to 35% by weight of (a),
- 3 to 20% by weight of (b), and
- 45 to 77% by weight of (c).

The additive as described above wherein the metal hydroxide is used in a stoichiometric equivalent to the amount of the fatty acid in the aluminum stearate.

The additive as described above wherein the amide wax is selected from bis-stearyl-ethylene-diamine, bis-oleyl-ethylene diamine, bis-montanyl-ethylene diamine, or mixtures thereof.

The additive as described above wherein the metal hydroxide is selected from LiOH, NaOH, KOH, $Mg(OH)_2$, $Ca(OH)_2$, $Ba(OH)_2$, $Zn(OH)_2$, $Al(OH)_3$ or mixtures thereof.

The additive as described above, characterized in that the additive contains up to 60 weight parts based on 100 weight parts of (a), (b), (c) and (d) of a micropowdered nucleant selected from sodium phenyl phosphinate, sodium isobutyl phosphinate, magnesium oxide, mercuric bromide, mercuric chloride, cadmium acetate, lead acetate, phenolphthalein, silver halides, silica, alumina, graphite, molybdenum disulfide, lithium fluoride, talcum, and mixtures thereof.

Use of the additive as described above for the treatment of granular polymeric materials.

A granulated polymeric composition comprising granules of a polymeric material having coated thereon the additive as described above.

The granulated polymeric composition as described above, characterized in that the additive comprises 0.03 to 2.0% by weight of the total composition.

The granulated polymeric composition as described above or 14, characterized in that the weight of each granule is 2 to 50 mg.

The granulated polymeric composition as described above characterized in that the polymeric material is a thermo-plastic polymer.

A granulated polymeric composition as defined above obtainable by the method as described above.

**Claims**

1. A method for the coating and/or mixing of granular technical polymeric materials with additives, characterized by conveying granules of a polymeric material in a controlled flow through a fluidized bed (16) having an inlet (22) to an outlet (26) while spraying an additive onto the granules in the fluidized bed.

2. The method according to claim 1, characterized in that the fluidized bed (16) is supplied with preheated air.

3. The method according to any one of claims 1 or 2, characterized in that the additive is sprayed neat in a molten state.

4. The method according to any one of claims 1 to 3, characterized in that the polymeric material is a thermo-plastic polymer.

5. The method according to any one of claims 1 to 4, characterized in that the additive comprises

   (a) 20 to 40% by weight of aluminum stearate, typically containing free fatty acid in a total amount of 1.0 to 10.0% by weight, based on the amount of said aluminum stearate,
   (b) 1 to 25% by weight of zinc stearate,
   (c) 35 to 79% by weight of at least one amide wax selected from N,N'-diamides of ethylene diamine and saturated $C_{16}$ to $C_{32}$ carboxylic acids whereby optionally up to 50% by weight based on the amount of (c) of said N,N'-diamides can be replaced by at least one compound selected from stearyl erucamide, erucyl erucamide, oleyl erucamide, stearyl stearamide, erucyl stearamide, stearyl stearate and $C_{27}$ to $C_{45}$ ketones, and

(d) a metal hydroxide in an amount sufficient to convert at least 20% of the free acid contained in the aluminum stearate into the corresponding metal salt.

6. A device for the coating and/or mixing of granular technical polymeric materials with additives, characterized in that a fluidized bed (16) is provided in a vessel (10), said fluidized bed (16) having an inlet (22), an outlet (26) arranged at a distance therefrom and an intermediate treatment path, that at least one spray device (28) is arranged in the treatment path and that the inlet (22) and the spraying device (28) are connected to a continuously working feeder (23,30).

7. The device according to claim 6, characterized in that the fluidized bed (16) is an annular bed including a central part (14) surrounded by a screen bottom (13), wherein the annular bed is divided by a separating baffle (25) and that the inlet (22) is arranged on one side of the separating baffle (25) and the outlet (26) is arranged on the other side of the separating baffle (25).

8. The device according to claim 7, characterized in that the central part (14) has a conical shape.

9. The device according to claim 7 or 8, characterized in that the outlet (26) is provided on the central part (14) or on the container wall.

10. The device according to any one of claims 6 to 9, characterized in that the vessel (10) has an air outlet (17) connected to the atmosphere above the fluidized bed (16), said air outlet (17) being connected via a blower (19) to an air inlet (15) provided below the fluidized bed (16).

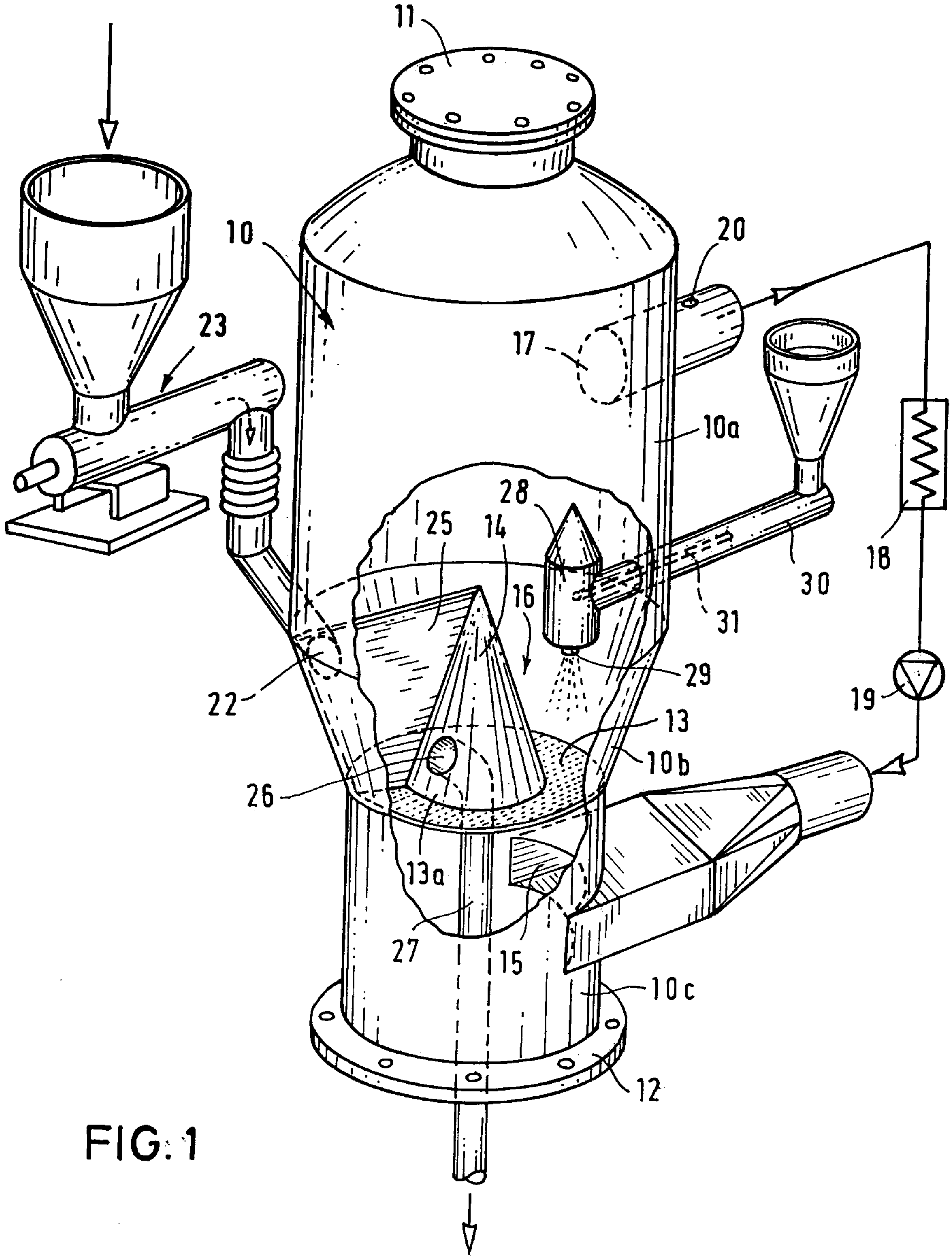
11
10
20
23
17
10a
28
25
14
18
30
16
31
22
29
19
13
10b
26
13a
27
15
10c
12

FIG. 1

FIG. 2

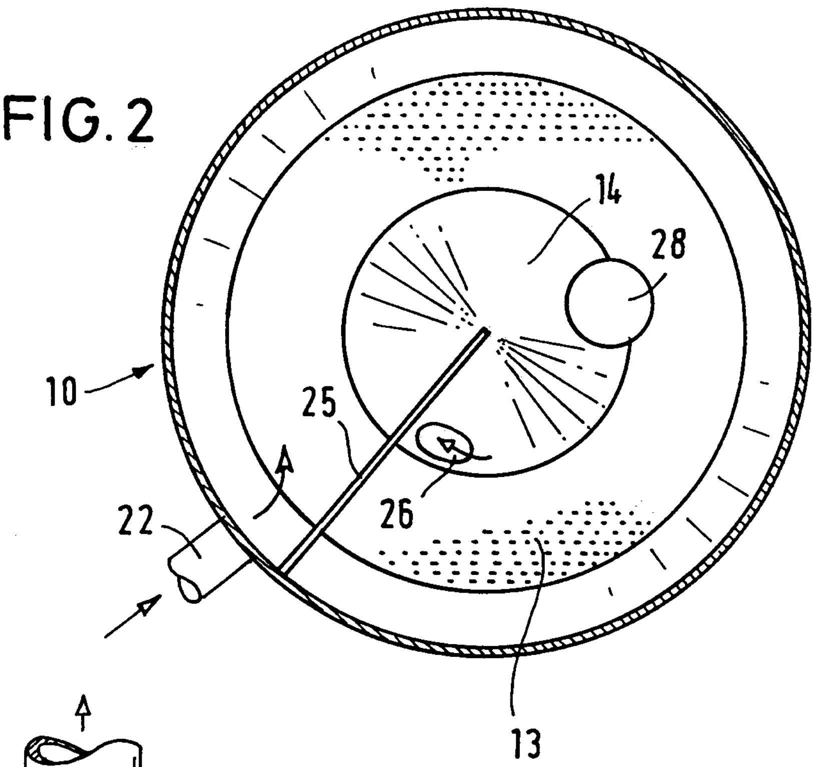


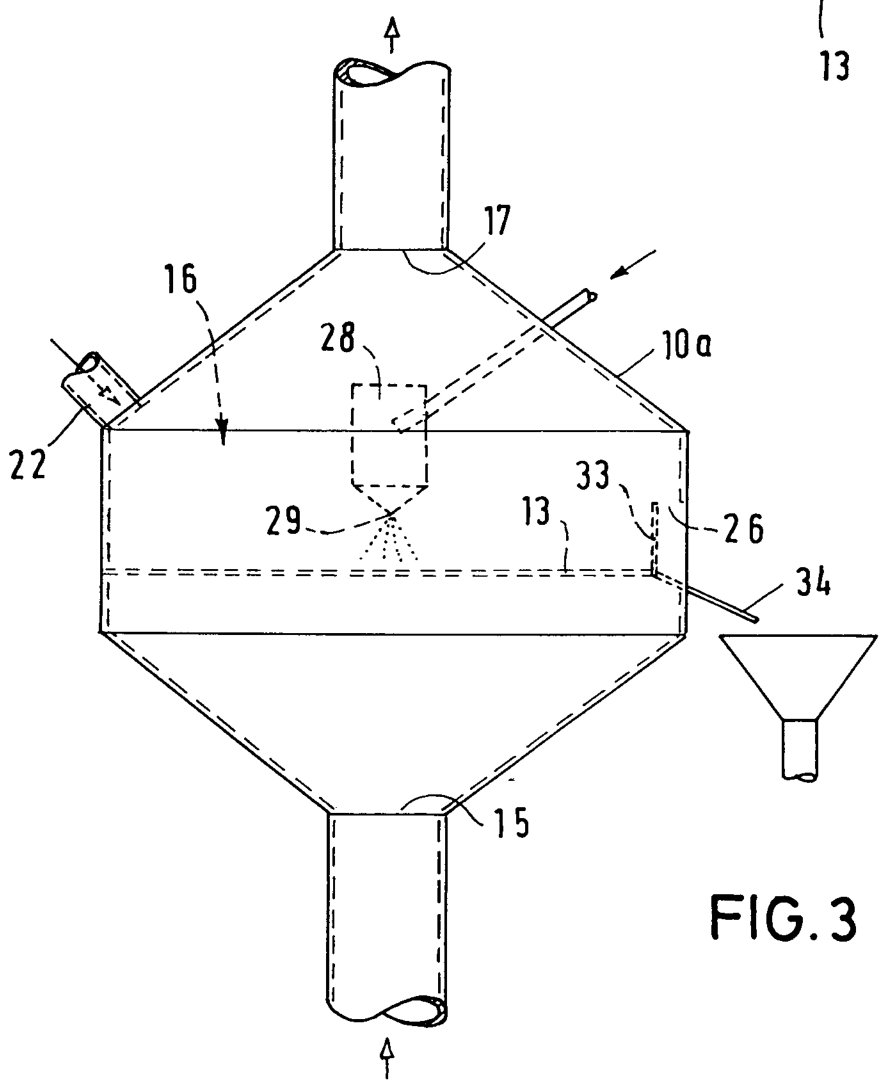


FIG. 3

European Patent Office

# EUROPEAN SEARCH REPORT

Application Number
EP 95 11 5995

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US-A-3 255 036 (M.G. KRAMER ET AL.)<br>* claim 1 *<br>* column 4, line 22-25 *<br>* column 4, line 33-46; figure 1 *<br>* examples 15-18 * | 1-4,6 | C08J3/20<br>C08J3/12<br>B01J2/16<br>B29B9/16<br>C08K5/00 |
| Y | US-A-4 511 603 (L.E. WALLACE)<br>* TOTALITY * | 1-4,6 | |
| Y | DE-A-23 52 426 (METALLGESELLSCHAFT AG)<br>* claims 1-3,9-11 *<br>* page 5, paragraph 3 - page 6 *<br>* page 8, paragraph 4 - page 9, paragraph 3 * | 1-4,6 | |
| A | US-A-4 704 330 (E.R. MOORE ET AL.)<br>* example 2 *<br>* column 2, line 52-68 * | 1-6 | |
| A<br><br>D | EP-A-0 331 419 (SHELL OIL COMPANY)<br>* claim 9 *<br>& US-A-4 960 617 | 1 | TECHNICAL FIELDS SEARCHED (Int.Cl.6) |
| D,A | EP-A-0 280 221 (BASF AG)<br>* claim 1 * | 1,5 | C08J<br>B29B<br>B01J |

The present search report has been drawn up for all claims

| Place of search | Date of completion of the search | Examiner |
|---|---|---|
| THE HAGUE | 22 January 1996 | Hallemeesch, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)